# EUROPEAN PATENT SPECIFICATION

(11) **EP 0 992 763 B1**
(45) Date of publication and mention of the grant of the patent: **02.09.2009**
(21) Application number: 99203215.1
(22) Date of filing: 01.10.1999
(51) Int. Cl.: G01B 11/30

(54) **Method and associated apparatus for measuring shape deviations of machined surfaced**
Verfahren und Apparat zur Formabweichungsmessung von bearbeiteten Oberflächen
Procédé et appareil pour la mesure des déviations de forme de surfaces usinées

(30) Priority: 06.10.1998 IT MI982145
(43) Date of publication of application: 12.04.2000
(73) Proprietor: Tenova S.p.A., 20149 Milano (IT)
(72) Inventor: Corallo, Valeriano, 10129 Torino (IT); Docchio, Franco, 24122 Bergamo (IT); Minoni, Umberto, 25064 Gussago (BS) (IT); Zorzella, Emidio, 25064 Gussago (BS) (IT)
(74) Representative: Raimondi, Margherita

(56) References cited:
- EP-A- 0 686 827
- GB-A- 2 177 793
- US-A- 4 296 333

## Description

The present invention relates to a method and an associated apparatus for measuring defects in the finish of machined and in particular ground surfaces.

It is known that, in the art of finish-machining surfaces of various objects such as, for example, cylindrical bodies forming components for rolling, calendering or the like, the said surfaces must be ground on automatic machines in order to obtain a predefined degree of smoothness of the surface itself.

It is also known that, despite the precision of modern machines, grinding in any case produces surface defects which are known by the term of "shape deviations".

These shape deviations are basically divided into three categories depending on the value assumed by a reference parameter (G) defined by the ratio between the amplitude and the pitch of the irregularities detected; in greater detail, the following are identified:
- shape errors = G < 0.001
- waviness = 0.001 < G < 0.01
- roughness = 0.01 < G < 0.2

In the case of roughness a further measurement parameter (Ra) defined by the arithmetic mean value of the absolute values of the deviations of the real profile with respect to the arithmetic mean line is also used.

Devices for measuring the shape deviations are also known and may be basically divided up into:
- Mechanical devices based on the use of a sensing tip which, passing over the surface to be measured, detects the irregularities and produces an electrical signal which can be represented in the form of a graph or the like; these devices have substantial drawbacks arising from the fact that they are of the invasive type since, being based on the contact between a metal tip and the surface to be measured, they may easily cause scratches which further alter the surface, making the measurement substantially unrepeatable. In addition, the mechanical devices have a high degree of approximation, cannot be automated and require a long time interval in order to perform the measurement which therefore cannot be carried out on the production line during machining of the part.

In order to overcome these drawbacks of mechanical instruments, optical devices have been provided and can be basically divided into two types:
- Profile measuring devices: which generate an electrical signal which describes the profile of the measured surface. These devices are based on techniques (triangulation and/or autofocus techniques) which detect the image of a light spot produced by a laser beam focused on the surface to be measured.

The triangulation devices are suitable for measuring shape errors and waviness, but are not suitable for measuring roughness, except in the case of very high roughness ranges (Ra>5µm); the autofocus devices have high performances for very low roughness ranges, i.e. in the case of highly reflective (near specular) surfaces, but on the other hand are very sensitive to alignment.
- Optoelectronic measuring devices: which perform an indirect measurement of the roughness based on the statistical analysis of the distribution of light back-diffused by a surface illuminated by a focused laser beam. This diffused light may basically be divided into two fields:

- a reflected field: with return of the light in the direction of incidence and
- a scattered field with return of the light in all other directions;
the angular distribution of the scattered field being linked to the surface finish of the part or to the presence of more or less deep and closely arranged defects.

On the basis of these principles optical instruments for measuring the surface roughness have been provided, said instruments measuring the reflected field and scattered field by means of optoelectronic devices arranged at various angles with respect to surface to be checked.

These instruments, however, also have drawbacks arising from the fact that, working at low power and the measurement being affected by noise, they are reliable for measurements of the roughness corresponding to values of Ra much lower than the wavelength of the light source used and do not provide any information regarding the waviness.

In addition, these optical devices are difficult to align with respect to the surface to be measured.

On account of their structure, the known optical instruments therefore allow either the roughness or the waviness or the shape errors to be measured only, but are not suitable for performing precise and repeatable measurements of all three surface defects at the same time.

Apparatus according to the preamble of claim 7 are disclosed into US-4 296 333 and GB- 2 177 793.

The technical problem which is posed, therefore, is that of providing an apparatus for detecting and measuring the defects in the finish of a machined surface, which is able to perform reliable and repetitive measurements both of the roughness, the waviness and the shape errors of the surface independently of the type of surface being examined, which has a low sensitivity to misalignment with the surface itself and which is able to perform substantially correct measurements even in the presence of surfaces which are not perfectly clean.

Within the scope of this problem a further requirement is that the instrument should perform the measurements at a speed such as to allow the installation thereof on processing machines so as to be able to perform the measurement automatically and on the production line.

These technical problems are solved according to the present invention by a method for measuring the shape deviations of machined surfaces in accordance with claim 1 and by an associated apparatus for measuring the shape deviations of machined surfaces, according to claim 8.

Further details may be obtained from the following description of a non-limiting example of embodiment of the invention provided with reference to the accompanying drawings, in which:
- Figure 1 shows a schematic perspective view of the apparatus according to the invention for measuring surface defects of machined surfaces;
- Figure 2 shows a front view of the head of the apparatus according to Fig. 1;
- Figure 3 shows an optical diagram of the apparatus according to the invention; and
- Figure 4 shows a block diagram of the method/flow of signals of the apparatus according to the present invention.

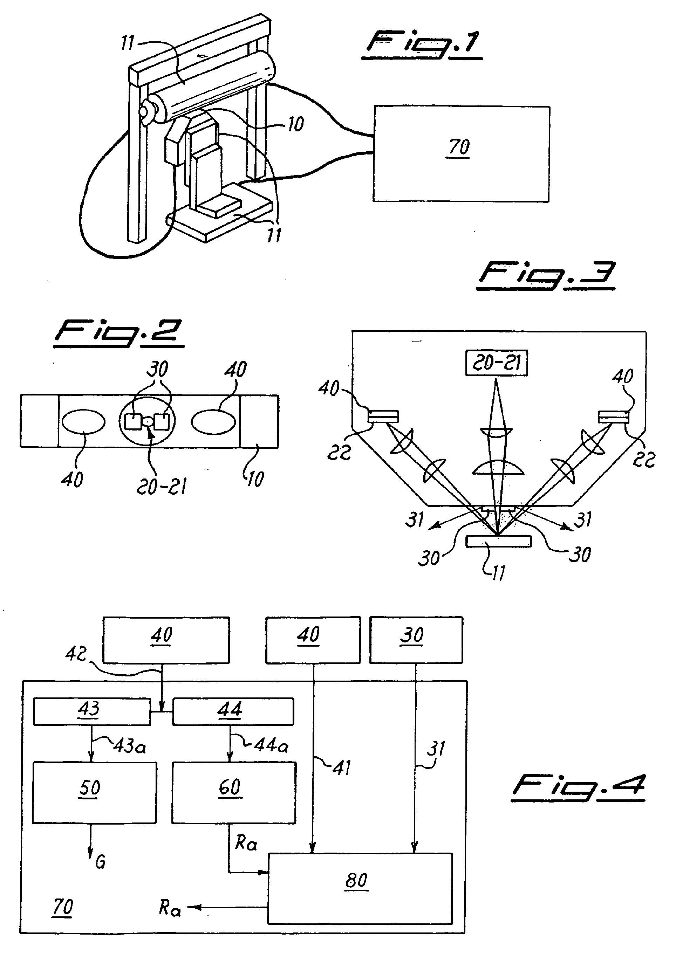

As illustrated in Figures 1 to 3, the detection and measurement apparatus according to the invention is essentially composed of a head 10 mounted on guides 10a which allow the controlled movement thereof along two or three axes.

The movement of the head may also be dependent upon and controlled by means of numerical control devices and the like which are known per se and neither illustrated nor described in detail.

The head 10 has, inside it, a laser light source 20, on the opposite sides of which two reflected-field detectors 30 and two scattered-field detectors 40 positioned outside the former are arranged.

In greater detail, the laser ray emitted by the source 20 is of the coherent type, preferably, but not exlusively with a wavelength of 780 nm, i.e. in the near-infrared wavelength range.

The head 10 also comprises a laser diode 21, or similar light source of the laser type, which emits a ray in the visible range and is used such that it follows the same optical path as the main laser source in order to facilitate the correct alignment of the head 10 in a direction perpendicular to the surface 11 and positioning thereof at a distance from the latter corresponding to the working distance of the sensor.

In order to prevent the light of said auxiliary positioning source 21 from interfering with the measurement to be performed, its power is kept at very low levels and cannot reach the devices 40 for detecting the scattered field on account of the arrangement, in between, of interferential optical filters 22 which let the infrared radiation pass through, but block the radiation in the visible range.

The reflected-light detectors 30 consist of high-performance semiconductor photodiodes which perform measurement of the intensity of the reflected field, emitting a corresponding signal 31.

The scattered-light detectors 40 are position-sensitive photodetectors arranged at 45° with respect to the direction of the incident beam which coincides with the line perpendicular to the surface to be measured.

Said scattered-field detectors 40 perform two separate types of measurement consisting of, respectively:
- measurement of the intensity of the scattered field with emission of a corresponding signal 41, and
- measurement of the defect profile of the surface performed using the technique of optical triangulation, with emission of a corresponding signal 42.

The apparatus according to the invention comprises, moreover, a central processing unit 70 for processing and converting electrical signals into predefined values of the parameters representing the different defects of the surface measured.

The unit 70 has, associated with it, two filters, respectively a low-pass filter 43 and high-pass filter 44 by means of which, as will become clearer below, it is possible to divide the signals relating to the waviness and to the shape errors (G) from the signals relating to the roughness (Ra).

The operating principle of the apparatus is as follows:
The apparatus is positioned on the surface to be checked and, by means of the ray in the visible range emitted by the laser diode 21, is aligned perpendicularly with respect to the surface itself.

Once the correct alignment of the head has been obtained, the said head is moved towards/away from the surface until an electrical signal indicates that the correct distance of the head from the surface 11 has been reached.

Once this position has been reached, scanning of the surface by the head commences: during this step the source 20 which emits the light ray focused on the surface 11 which causes the formation of the scattered and reflected fields is activated, the intensity thereof depending on the defects of the surface 11 which are separately detected by the corresponding detectors 30 and 40.

The reflected-field detector 30 converts the light signal received, the intensity of which is substantially due solely to the roughness of the surface 11, into a corresponding electrical signal 31 by means of a transimpedance amplifier (not shown).

At the same time, by means of an analog transimpedance amplifier, the scattered-field detectors 40 convert the light signal detected into two separate analog electrical signals, one 41 of which depends substantially solely on the roughness of the surface 11 and the other 42 of which, obtained by means of optical triangulation, depends on all three surface defects defined above.

The set of signals 31, 41 and 42 emitted by the detectors 30 and 40 is sent to the central processing unit 70, which is equipped with a microprocessor board, where: the signals 42 are filtered both via a digital filter of the low-pass type 43 and via a digital filter of the high-pass type 44.

The signal 43a output from the low-pass filter 43 is sent to an analyser 50 which carries out an analysis thereof according to the Fourier method in order to identify the components relating to the waviness and shape error defects and outputs a measurement, in terms of absolute value, of the conventional parameter G representing the waviness and shape error defects themselves.

The signal 44a output from the high-pass filter 44 is sent to an analyser 60 which performs analysis thereof using an algorithm designed to select only the components relating to the roughness of the surface, outputting a measurement, in terms of absolute value, of the conventional parameter Ra representing the roughness.

Since the value of Ra thus obtained cannot be related to the conventional measurement performed using a mechanical feeler, it is necessary to perform standardisation thereof by means of a further analyser 80 which receives at its input the signal corresponding to Ra previously obtained and the reflected and scattered-field intensity signals 31 and 41 respectively supplied by the detectors 30 and 40 and relating to the roughness alone.

The analyser 80 thus outputs a value of Ra representing the roughness of the surface 11 being examined and comparable with the standard values defined by the norms.

As illustrated in Fig. 1, with the apparatus described above it is possible to define a method which envisages the following steps:
a) arrangement of the apparatus in the vicinity of a surface to be measured;
b) positioning of the apparatus in a direction perpendicular to and at a correct distance from the surface to be measured by means of the emission of a light ray in the visible range;
c) activation of the laser light source and scanning of the surface;
d1) detection and measurement of the reflected field generated by the laser ray which strikes the surface, using an associated analyser;
d2) emission of a corresponding roughness signal (31);
e1) detection and measurement of the scattered field generated by the laser ray which strikes the surface, using an associated analyser;
e2) emission, by the analyser, of a first electrical signal obtained by means of optical triangulation and relating to the defect profile of the surface and a second scattered-field electrical signal relating solely to the roughness of the surface;
f) sending of all the measurement signals to the central processing unit;
g1) filtering, by means of a low-pass digital filter, of the signal relating to the defect profile of the surface;
g2) analysis of the signal output from the low-pass filter, using the Fourier method;
g3) emission of the corresponding values of (G) relating to waviness and/or shape errors;
h1) filtering, by means of a high-pass digital filter, of the same defect signal of the scattered field obtained by means of optical triangulation;
h2) analysis of the signal output from the high-pass filter by means of a conventional calculation algorithm, so as to obtain values of the roughness parameter Ra;
h3) standardisation of the Ra value, said standardisation being preferably performed by means of an associated analyser, the input of which receives the reflected-field, scattered-field intensity and Ra signals previously obtained and the output of which emits the corresponding value of Ra standardised in accordance with the existing norms.

It is therefore obvious how, as a result of the method and the apparatus according to the invention, it is possible to obtain correct measurements both of the shape defects, the waviness and the roughness over the whole definition range of Ra, these measurements being able to be obtained independently of the type of surface measured and in a fast, precise and automatic manner.

It is obvious, moreover, that the measurement is performed by means of a relative movement between the apparatus and the part and this movement may be performed by moving the former or the latter in relation to the measurement to be performed.

## Claims

1. Method for measuring the shape deviations of machined surfaces, comprising the following steps:
a) arrangement, in the vicinity of a surface **(11)** to be measured, of a measuring apparatus equipped with an emitter of light in the visible range **(21),** an emitter of a laser ray **(20)** and reflected-field and scattered-field detectors **(30,40),** respectively;
b) activation of the visible light source **(21)** and positioning of the apparatus in a direction perpendicular to and at a correct distance from the surface **(11)** to be measured;
c1) activation of the laser light source **(20);**
c2) scanning of the surface **(11)** to be measured;
d1) detection and measurement of the reflected field generated by the laser ray which strikes the surface **(11),** whereby the reflected-field detector **(30)** performs measurement of the intensity of the reflected field;
d2) emission of a corresponding roughness signal **(31)** by an analyser;
e1) detection and measurement of the scattered field generated by the laser beam which strikes the surface **(11);** e2) emission of a first scattered-field electrical signal **(42)** relating to the shape deviations of the surface and a second scattered-field electrical signal **(41)** relating to the roughness of the surface **(11),** wherein the second scattered-field signal **(41)** is a signal corresponding to the intensity of the scattered field;
f1) sending of all the signals emitted to a central processing unit **(70);**
i) separation of the scattered-field and reflected-field signal components into corresponding individual and independent values of the parameters representing the defects of the surface to be measured, **characterized in that** said first scattered-field signal **(42)** relating to the shape deviations of the surface **(11)** is obtained by means of optical triangulation.

2. Method according to Claim 1, **characterized in that** it also comprises a step involving:
g1) low-pass and high-pass filtering of said first scattered-field signal relating to the shape deviations of the surface.

3. Method according to Claim 1, **characterized in that** it also comprises the steps of:
h1) analysis of the signal output from a low-pass filter for determining the value of the parameter (G) representing the shape error and/or waviness;
h2) analysis of the signal output from a high-pass filter for determining a value of the parameter (Ra) representing the roughness.

4. Method according to Claim 3, **characterized in that** the analysis of the signal output from the low-pass filter is performed using the Fourier method.

5. Method according to Claim 1, **characterized in that** it also envisages the further step of standardisation of the value of the roughness parameter previously obtained.

6. Method according to Claim 5, **characterized in that** said standardisation of the value of the roughness parameter is obtained by means of processing of the value of the roughness parameter itself, the scattered-field intensity signal and reflected-field intensity signal determined beforehand.

7. Apparatus for measuring shape deviations of machined surfaces, comprising at least one source (20) emitting a laser ray, at least one scattered-field detector (40), at least one reflected-field detector (30) and a central processing unit (70) which is adapted to receive at its input the signal components emitted by the said scattered-field and reflected-field detectors (40,30) and is adapted to output a corresponding individual and mutually independent measurement values of the associated parameters (Ra,G) representing the said deviations, wherein said reflected-field detector (30) is adapted to emit a signal indicating the intensity of the reflected field itself; and wherein said scattered-field detector (40) is adapted to emit a first signal (41) indicating the intensity of the scattered field itself wherein the reflected- and scattered-field intensity signal supplied by the detectors (40,30) relate to the roughness alone, and wherein said scattered-field detector (40) is adapted to emit a second signal (42) relating to the defect profile of the surface (11), **characterized in that** said second signal (42) relating to the defect profile of the surface (11) is an optical triangulation signal.

8. Apparatus according to Claim 7, **characterized in that** it comprises a low-pass filter (43) for said optical triangulation signal (42) emitted by the scattered-field detector (40).

9. Apparatus according to Claim 7, **characterized in that** it comprises a high-pass filter (44) for said optical triangulation signal (42) emitted by the scattered-field detector (40).

10. Apparatus according to Claim 8, **characterized it that** it comprises an analyser (50) of the signal (43a) emitted by the low-pass filter (43), the output of which provides the values of the parameter (G) representing the shape defects of the surface.

11. Apparatus according to Claim 10, **characterized in that** said analyser (50) performs a Fourier analysis.

12. Apparatus according to claim 11, **characterized in that** it comprises an analyser (60) of the signal (44a) emitted by the high-pass filter (44), which is designed to provide a value of the parameter (Ra) representing the roughness of the surface (11).

13. Apparatus according to Claim 12, **characterized in that** it comprises a circuit for standardisation of the value of the parameter (Ra) representing the roughness of the surface (11).

14. Apparatus according to claim 13, **characterized in that** said circuit for standardisation of the roughness signal receives at its input both the signal emitted by the analyser (60) of the signal (44a) output from the high-pass filter (44), the scattered-field and intensity signal and the signal (31) emitted by the reflected-field detector (30).

15. Apparatus according to claim 7, **characterized in that** the laser ray is in the infrared range.

16. Apparatus according to Claim 7, **characterized in that** it comprises a light source in the visible range for correct positioning of the apparatus relative to the surface to be measured.

17. Apparatus according to Claim 7, **characterized in that** the reflected-field detectors consist of two detectors symmetrically arranged with respect to the laser-ray source.

18. Apparatus according to Claim 7, **characterized in that** the scattered-field detectors consist of two detectors symmetrically arranged with respect to the laser-ray source.

19. Apparatus according to Claim 18, **characterized in that** the scattered-field detectors are positioned outside the reflected-field detectors.

## Patentansprüche

1. Verfahren zur Messung der Formabweichungen von bearbeiteten Oberflächen, welches die folgenden Schritte umfasst:
a) Anordnen einer Messapparatur, welche mit einer Emissionsquelle für Licht im sichtbaren Bereich (21), einer Emissionsquelle für einen Laserstrahl (20) und Reflexionsfeld- und Streuungsfeld-Detektoren (30,40) ausgestattet ist, in der Nähe einer zu vermessenden Oberfläche (11), beziehungsweise;
b) Aktivierung der Quelle sichtbaren Lichts (21) und Positionieren des Apparates in einer Richtung senkrecht zu und in einem korrekten Abstand zu der zu vermessenden Oberfläche (11);
c1) Aktivierung der Laserlichtquelle (20);
c2) Abtasten der zur vermessenden Oberfläche (11);
d1) Detektierung und Messung des reflektierten Feldes, welches durch den auf die Oberfläche (11) auftreffenden Laserstrahl generiert wird, wobei der Reflexionsfeld-Detektor (30) eine Messung der Intensität des reflektierten Feldes ausführt;
d2) Emission eines entsprechenden Rauhigkeitssignals (31) durch einen Analysator;
e1) Detektierung und Messung des Streuungsfeldes, welches durch den auf die Oberfläche (11) auftreffenden Laserstrahl erzeugt wird;
e2) Emission eines ersten elektrischen Streuungsfeld-Signals (42), welches die Formabweichungen der Oberfläche betrifft, und eines zweiten elektrischen Streuungsfeld-Signals (41), welches die Rauhigkeit der Oberfläche (11) betrifft, wobei das zweite elektrische Streuungsfeld-Signal (41) ein der Intensität des Streuungsfeldes entsprechendes Signal ist;
f1) Senden aller emittierten Signale an eine zentrale Verarbeitungseinheit (70);
i) Separieren der Streuungsfeld- und Reflexionsfeld-Signalkomponenten in korrespondierende individuelle und unabhängige Werte der Parameter, welche die Defekte der zu vermessenden Oberfläche repräsentieren,
**dadurch gekennzeichnet, dass**
das genannte erste Streuungsfeld-Signal (42), welches die Formabweichungen der Oberfläche (11) betrifft, mittels optischer Triangulation erhalten wird.

2. Verfahren nach Anspruch 1, **dadurch gekennzeichnet, dass** es auch einen Schritt umfasst verbunden mit:
g1) Tiefpass- und Hochpass-Filterung des genannten ersten Streuungsfeld-Signals, welches die Formabweichungen der Oberfläche betrifft.

3. Verfahren nach Anspruch 1, **dadurch gekennzeichnet, dass** es auch die folgenden Schritte umfasst:
h1) Analyse der Ausgangssignale von einem Tiefpassfilter zur Bestimmung des Wertes des Parameters (G), welcher den Formfehler und/oder Welligkeit repräsentiert;
h2) Analyse der Ausgangssignale von einem Hochpassfilter zur Bestimmung eines Wertes des Parameters (Ra), welcher die Rauhigkeit repräsentiert.

4. Verfahren nach Anspruch 3, **dadurch gekennzeichnet, dass** die Analyse der Ausgangssignale des Tiefpassfilters unter Verwendung des Fourier-Verfahrens ausgeführt wird.

5. Verfahren nach Anspruch 1, **dadurch gekennzeichnet, dass** es auch den weiteren Schritt der Standardisierung des Wertes des vorgängig erhaltenen Rauhigkeitsparameters vorsieht.

6. Verfahren nach Anspruch 5, **dadurch gekennzeichnet, dass** die genannte Standardisierung des Wertes des Rauhigkeitsparameters mittels Verarbeitung des Wertes des Rauhigkeitsparameters selbst erhalten wird, wobei das Streuungsfeld-Intensitätssignal und das Reflexionsfeld-Intensitätssignal vorgängig bestimmt wurden.

7. Vorrichtung zur Messung von Formabweichungen von bearbeiteten Oberflächen, umfassend mindestens eine einen Laserstrahl emittierende Quelle (20), mindestens einen Streuungsfeld-Detektor (40), mindestens einen Reflexionsfeld-Detektor (30) und eine zentral Verarbeitungseinheit (70), welche zum Empfang der durch die genannten Streuungsfeld- und Reflexionsfeld-Detektoren (40,30) emittierten Signalkomponenten an ihrem Eingang angepasst ist, und welche dazu angepasst ist, korrespondierende individuelle und voneinander unabhängige Messwerte der zugeordneten die genannten Abweichungen repräsentierenden Parameter (Ra,G) abzugeben, wobei der genannte Reflexionsfeld-Detektor (30) zur Emission eines Signals angepasst ist, welches die Intensität des Reflexionsfelds selbst anzeigt; und wobei der genannte Streuungsfeld-Detektor (40) zur Emission eines ersten Signals (41) angepasst ist, welches die Intensität des Streuungsfelds selbst anzeigt, wobei sich die durch die Detektoren (40,30) zugeführten Reflexions- und Streuungsfeld-Intensitätssignale auf die Rauhigkeit alleine beziehen, und wobei der genannte Streuungsfeld-Detektor (40) zur Emission eines zweiten Signals (42) angepasst ist, welches die Formabweichung der Oberfläche (11) betrifft, **dadurch gekennzeichnet, dass** das genannte die Formabweichung der Oberfläche (11) betreffende zweite Signal (42) ein optisches Triangulationssignal ist.

8. Vorrichtung nach Anspruch 7, **dadurch gekennzeichnet, dass** sie einen Tiefpassfilter (43) für das genannte durch den Streuungsfeld-Detektor (40) emittierte Triangulationssignal (42) umfasst.

9. Vorrichtung nach Anspruch 7, **dadurch gekennzeichnet, dass** sie einen Hochpassfilter (44) für das genannte durch den Streuungsfeld-Detektor (40) emittierte Triangulationssignal umfasst.

10. Vorrichtung nach Anspruch 8, **dadurch gekennzeichnet, dass** sie einen Analysator (50) des durch den Tiefpassfilter (43) emittierten Signals (43a) umfasst, wobei dessen Ausgang die Werte des die Formabweichung der Oberfläche repräsentierenden Parameters (G) liefert.

11. Vorrichtung nach Anspruch 10, **dadurch gekennzeichnet, dass** der genannte Analysator (50) eine Fourier-Analyse durchführt.

12. Vorrichtung nach Anspruch 11, **dadurch gekennzeichnet, dass** sie einen Analysator (60) des durch den Hochpassfilter (44) emittierten Signals (44a) umfasst, welcher dazu ausgebildet ist, einen Wert des die Rauhigkeit der Oberfläche (11) repräsentierenden Parameters (Ra) zu liefern.

13. Vorrichtung nach Anspruch 12, **dadurch gekennzeichnet, dass** sie einen Schaltkreis für die Standardisierung des Wertes des die Rauhigkeit der Oberfläche (11) repräsentierenden Parameters (Ra) umfasst.

14. Vorrichtung nach Anspruch 13, **dadurch gekennzeichnet, dass** der genannte Schaltkreis für die Standardisierung des Rauhigkeitssignals an seinem Eingang beides empfängt, das durch den Analysator (60) aufgrund des vom Hochpassfilter (44) abgegebenen Signals (44a) emittierte Signal, das Streuungsfeld- und Intensitätssignal und das durch den Reflexionsfeld-Detektor (30) emittierte Signal (31).

15. Vorrichtung nach Anspruch 7, **dadurch gekennzeichnet, dass** der Laserstrahl im Infrarot-Bereich ist.

16. Vorrichtung nach Anspruch 7, **dadurch gekennzeichnet, dass** sie eine Lichtquelle im sichtbaren Bereich zur korrekten Positionierung der Vorrichtung relativ zu der zu vermessenden Oberfläche umfasst.

17. Vorrichtung nach Anspruch 7, **dadurch gekennzeichnet, dass** die Reflexionsfeld-Detektoren aus zwei bezüglich der Laserstrahlquelle symmetrisch angeordneten Detektoren bestehen.

18. Vorrichtung nach Anspruch 7, **dadurch gekennzeichnet, dass** die Streuungsfeld-Detektoren aus zwei bezüglich der Laserstrahlquelle symmetrisch angeordneten Detektoren bestehen.

19. Vorrichtung nach Anspruch 18, **dadurch gekennzeichnet, dass** die Streuungsfeld-Detektoren ausserhalb der Reflexionsfeld-Detektoren positioniert sind.

## Revendications

1. Procédé pour la mesure des déviations de forme de surfaces usinées, comprenant les étapes suivantes :
a) agencement, au voisinage d'une surface (11) à mesurer, d'un appareil de mesure doté d'un émetteur de lumière dans le domaine visible (21), d'un émetteur de rayon laser (20) et de détecteurs de champ réfléchi et de champ diffusé (30, 40), respectivement ;
b) activation de la source de lumière visible (21) et positionnement de l'appareil dans une direction perpendiculaire à, et placé à une distance correcte de, la surface (11) à mesurer ;
c1) activation de la source de lumière à laser (20) ;
c2) balayage de la surface (11) à mesurer ;
d1) détection et mesure du champ réfléchi généré par le rayon laser qui est incidente sur la surface (11), de sorte que le détecteur de champ réfléchi (30) exécute une mesure de l'intensité du champ réfléchi ;
d2) émission d'un signal de rugosité correspondant (31) par un analyseur ;
e1) détection et mesure du champ diffusé généré par le faisceau laser qui est incidente sur la surface (11);
e2) émission d'un premier signal électrique de champ diffusé (42) se rapportant aux déviations de forme de la surface et d'un second signal électrique de champ diffusé (41) se rapportant à la rugosité de la surface (11) dans laquelle le second signal de champ diffusé (41) est un signal correspondant à l'intensité du champ diffusé ;
f1) transmission de tous les signaux émis à une unité centrale de traitement (70) ;
i) séparation des composantes du signal de champ diffusé et de champ réfléchi en valeurs individuelles et indépendantes correspondantes des paramètres représentant les défauts de la surface à mesurer, **caractérisé en ce que** ledit premier signal de champ diffusé (42) se rapportant aux déviations de forme de la surface (11) est obtenu au moyen d'une triangulation optique.

2. Procédé selon la revendication 1, **caractérisé en ce qu'**il comprend également une étape mettant en oeuvre :
g1) un filtrage passe-bas et passe-haut dudit premier signal de champ diffusé se rapportant aux déviations de forme de la surface.

3. Procédé selon la revendication 1, **caractérisé en ce qu'**il comprend également les étapes de :
h1) analyse de la sortie du signal venant d'un filtre passe-bas pour déterminer la valeur du paramètre (G) représentant l'erreur de forme et/ou l'ondulation ;
h2) analyse de la sortie du signal venant du filtre passe-haut pour déterminer une valeur du paramètre (Ra) représentant la rugosité.

4. Procédé selon la revendication 3, **caractérisé en ce que** l'analyse de la sortie du signal venant du filtre passe-bas est exécutée en utilisant le procédé de Fourier.

5. Procédé selon la revendication 1, **caractérisé en ce qu'**il envisage également l'étape supplémentaire de normalisation de la valeur du paramètre de rugosité obtenue précédemment.

6. Procédé selon la revendication 5, **caractérisé en ce que** ladite normalisation de la valeur du paramètre de rugosité est obtenue au moyen du traitement de la valeur du paramètre de rugosité elle-même, du signal d'intensité du champ diffusé et du signal d'intensité du champ réfléchi déterminés au préalable.

7. Appareil pour mesurer des déviations de forme de surfaces usinées, comprenant au moins une source (20) émettant un rayon laser, au moins un détecteur de champ de diffusion (40), au moins un détecteur de champ réfléchi (30) et une unité centrale de traitement (70), laquelle est adaptée pour recevoir au niveau de son entrée les composantes du signal émises par lesdits détecteurs de champ diffusé et de champ réfléchi (40 , 30) et est adaptée pour délivrer des valeurs correspondantes de mesures individuelles et mutuellement indépendantes des paramètres associés (Ra, G) représentant lesdites déviations, dans lequel ledit détecteur de champ réfléchi (30) est adapté pour émettre un signal indiquant l'intensité du champ réfléchi lui-même ; et dans lequel ledit détecteur de champ diffusé (40) est adapté pour émettre un premier signal (41) indiquant l'intensité du champ diffusé lui-même dans lequel le signal d'intensité du champ réfléchi et du champ diffusé fourni par les détecteurs (40, 30) concerne la rugosité seule, et dans lequel ledit détecteur de champ diffusé (40) est adapté pour émettre un second signal (42) se rapportant au profil de défaut de la surface (11), **caractérisé en ce que** ledit second signal (42) se rapportant au profil de défaut de la surface (11) est un signal de triangulation optique.

8. Appareil selon la revendication 7, **caractérisé en ce qu'**il comprend un filtre passe-bas (43) pour ledit signal de triangulation optique (42) émis par le détecteur de champ diffusé (40).

9. Appareil selon la revendication 7, **caractérisé en ce qu'**il comporte un filtre passe-haut (44) pour ledit signal de triangulation optique (42) émis par le détecteur de champ diffusé (40).

10. Appareil selon la revendication 8, **caractérisé en ce qu'**il comprend un analyseur (50) du signal (43a) émis par le filtre passe-bas (43), dont la sortie fournit les valeurs du paramètre (G) représentant les défauts de forme de la surface.

11. Appareil selon la revendication 10, **caractérisé en ce que** ledit analyseur (50) exécute une analyse de Fourier.

12. Appareil selon la revendication 11, **caractérisé en ce qu'**il comprend un analyseur (60) du signal (44a) émis par le filtre passe-haut (44), lequel est conçu pour fournir une valeur du paramètre (Ra) représentant la rugosité de la surface (11).

13. Appareil selon la revendication 12, **caractérisé en ce qu'**il comprend un circuit pour la normalisation de la valeur du paramètre (Ra) représentant la rugosité de la surface (11).

14. Appareil selon la revendication 13, **caractérisé en ce que** ledit circuit pour la normalisation du signal de rugosité reçoit au niveau de son entrée à la fois le signal émis par l'analyseur (60) du signal (44a) délivré à partir du filtre passe-haut (44), le signal d'intensité et de champ diffusé et le signal (31) émis par le détecteur de champ réfléchi (30).

15. Appareil selon la revendication 7, **caractérisé en ce que** le rayon laser se situe dans le domaine de l'infrarouge.

16. Appareil selon la revendication 7, **caractérisé en ce qu'**il comprend une source de lumière dans le domaine visible pour un positionnement correct de l'appareil par rapport à la surface à mesurer.

17. Appareil selon la revendication 7, **caractérisé en ce que** les détecteurs de champ réfléchi sont constitués de deux détecteurs disposés symétriquement par rapport à la source de rayon laser.

18. Appareil selon la revendication 7, **caractérisé en ce que** les détecteurs de champ diffusé sont constitués de deux détecteurs disposés symétriquement par rapport à la source de rayon laser.

19. Appareil selon la revendication 18, **caractérisé en ce que** les détecteurs de champ diffusé sont positionnés à l'extérieur des détecteurs de champ réfléchi.
